(19) Europäisches Patentamt
European Patent Office
Office européen des brevets

(11) Veröffentlichungsnummer: **0 323 599 B1**

(12) # EUROPÄISCHE PATENTSCHRIFT

(45) Veröffentlichungstag der Patentschrift: **14.08.91 Patentblatt 91/33**

(51) Int. Cl.$^5$: **C09D 167/02**, C08J 7/04

(21) Anmeldenummer: **88121173.4**

(22) Anmeldetag: **17.12.88**

(54) **Polyesterfolie mit einer als Haftvermittler für Metall wirkenden Beschichtung und hervorragendem Wickelverhalten.**

(30) Priorität: **28.12.87 US 138228**

(43) Veröffentlichungstag der Anmeldung: **12.07.89 Patentblatt 89/28**

(45) Bekanntmachung des Hinweises auf die Patenterteilung: **14.08.91 Patentblatt 91/33**

(84) Benannte Vertragsstaaten: **BE DE ES FR GB IT LU NL SE**

(56) Entgegenhaltungen:
**EP-A- 0 144 878**
**EP-A- 0 188 620**
**US-A- 4 486 483**

(73) Patentinhaber: **HOECHST CELANESE CORPORATION**
**Route 202-206 North**
**Somerville, N.J. 08876 (US)**

(72) Erfinder: **Rudd, David**
**Canterbury Way**
**Naples, NC 28760 (US)**
Erfinder: **Rice, Sandra W.**
**815 Mosteller Drive**
**Greer, SC 29652 (US)**

(74) Vertreter: **Güthlein, Paul, Dr. et al**
**KALLE Niederlassung der Hoechst AG**
**Patentabteilung Postfach 3540**
**Rheingaustrasse 190**
**W-6200 Wiesbaden 1 (DE)**

EP 0 323 599 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft orientierte Polyesterfolien mit einer verbesserten, als Haftvermittler für Metall wirkenden Beschichtung. Das verbesserte Beschichtungsgemisch ermöglicht ein schnelles, klebfreies Auf- und Abwickeln (der Folien) und ergibt den gleichen Grad der Haftung gegenüber nachträglich aufgebrachten Metallschichten wie bekannte grundierbeschichtete Polyesterfolien.

Mit Metallschichten versehene Polyesterfolien eignen sich für verschiedene Anwendungen auf den Gebieten Verpackung und Folien mit reduzierter Durchlässigkeit für Solarstrahlungen. Die Brauchbarkeit dieser Folien ist wesentlich von der guten Bindung zwischen Metallschicht und Polyesterfolie abhängig. Es ist deshalb Gegenstand ständiger Bemühungen, die Haftung von Polyesterfolien gegenüber nachträglich aufgebrachten Metallschichten weiter zu verbessern.

Aus US-A-4493872 ist eine Polyesterfolie bekannt, die mit einem Beschichtungsgemisch aus sulfoniertem Copolyester versehen ist. Die Klebrigkeit der Beschichtung aus sulfoniertem Copolyester kann jedoch gelegentlich zu Verarbeitungsschwierigkeiten bei der Herstellung und anschließenden Metallisierung dieser Folien führen. Insbesondere neigen aneinanderliegende Schichten dieser mit sulfoniertem Copolyester beschichteten Folien zum Verkleben, wenn die Folien zu einer Rolle aufgewickelt werden. Das Problem des Verklebens tritt am stärksten auf, wenn beide Seiten der Folie mit der Haftbeschichtung versehen sind.

Dieser Nachteil kann durch Einarbeiten von Kieselsäureteilchen in das sulfonierte Copolyesterbeschichtungsgemisch reduziert werden ; allerdings kann die Zugabe von Kieselsäureteilchen andere Probleme hervorrufen, u.a. die Bildung von unerwünschten Beschichtungsmustern auf der Folienoberfläche. Ferner kann die Kieselsäure auch den pH-Wert des Beschichtungsgemischs verändern, so daß ein Puffermittel zugesetzt werden muß, wodurch sich die Topfzeit verkürzen kann.

In der EP-A-0188620 wird eine Polyesterfolie beschrieben, die auf mindestens einer Oberfläche mit einer Schicht aus der Mischung eines höheren Fettsäurewachses mit einem sulfonierten Copolyester überzogen ist. Durch die Zugabe des höheren Fettsäurewachses sollen die Antiblockeigenschaften der Folie verbessert werden. Die Beschichtung kann in Form einer wäßrigen Dispersion zwischen den Streckvorgängen aufgebracht werden. Der Begriff "höheres Fettsäurewachs" wird definiert als aliphatische Esterverbindung einer höheren Fettsäure mit 12 bis 35 Kohlenstoffatomen und einem Alkohol mit 15 bis 35 Kohlenstoffatomen. Als höheres Fettsäurewachs wird z.B. Carnaubawachs, Montanwachs, Wollwachs und Schellakwachs genannt, wobei Carnaubawachs und Montanwachs besonders bevorzugt werden. In dieser Patentschrift wird auch angegeben, daß diese höheren Fettsäurewachse modifiziert werden können durch Umwandlung eines Teiles oder der gesamten Fettsäureester in das entsprechende Alkalisalz (wie z.B. Natrium oder Kalium) oder die entsprechende Erdalkaliverbindung (wie z.B. Calcium, Magnesium oder Barium). Der sulfonierte Copolyester wird als das Umsetzungsprodukt aus einem aromatischen Dicarbonsäuremonomeren und einer Glykolkomponente beschrieben, in dem ein Teil der aromatischen Dicarbonsäure ein Alkalisalz einer esterbildenden aromatischen Sulfonsäure ist wie z.B. 5-Natrium-sulfoisophthalat, Natriumsulfoterephthalat und deren esterbildende Derivate. Der sulfonierte Copolyester soll zu mindestens 60 Mol-% aus dem Dicarbonsäurecomonomeren bestehen. Das Alkalisalz der esterbildenden aromatischen Sulfonsäure soll in einem Anteil von 7 bis 40 Mol-%, vorzugsweise 10 bis 20 Mol-%, bezogen auf die gesamten sauren Reaktionspartner, in dem sulfonierten Copolyester enthalten sein.

Die Aufgabe der vorliegenden Erfindung bestand darin, ein verbessertes Beschichtungsgemisch für eine Folie zu schaffen, das einen als Haftvermittler für metallische Überzüge wirkende Beschichtung bildet. Bei guter Haftung gegenüber Metallen soll zusätzlich stets gewährleistet sein, daß die mit dem zu schaffenden Beschichtungsgemisch beschichtete Folie gleichzeitig gute Weiterverarbeitungseigenschaften besitzt, d.h. sie darf auch bei schnellem Auf- und Abwickeln zum Zweck der Konfektionierung keine Verklebungen bilden oder zum Verblocken neigen.

Gegenstand der vorliegenden Erfindung ist ein wäßriges Beschichtungsgemisch für thermoplastische Folien, enthaltend :

1. 1 bis 10 Gew.-%, bezogen auf das Gesamtgewicht des Beschichtungsgemischs, eines sulfonierten Copolyesters, der im wesentlichen aus dem Kondensationsprodukt der folgenden Monomeren bzw. deren zur Bildung von Polyestern befähigten Derivaten besteht :
   - A) 65 bis 95 Mol-% Isophthalsäure,
   - B) 0 bis 30 Mol-% mindestens einer aliphatischen Dicarbonsäure mit der Formel $HOOC(CH_2)_nCOOH$, wobei n im Bereich von 1 bis 11 liegt,
   - C) 5 bis 15 Mol-% mindestens eines Sulfomonomeren mit einer an den aromatischen Teil einer aromatischen Dicarbonsäure gebundenen Alkalisulfonatgruppe und
   - D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen,

2. 0,05 bis 3 Gew.-%, bezogen auf das Gesamtgewicht des Beschichtungsgemischs, mindestens eines wasserlöslichen Alkalisalzes einer Fettsäure mit 10 bis 18 Kohlenstoffatomen.

Weiterhin stellt die Erfindung eine orientierte thermoplastische Folie bereit, die mindestens einseitig mit einer als Haftvermittler für Metall wirkenden Beschichtung versehen ist, wobei die Beschichtung in Form eines wäßrigen Beschichtungsgemischs aufgebracht wird, das sich aus den folgenden Komponenten zusammensetzt:

1. 1 bis 10 Gew.-%, bezogen auf das Gesamtgewicht des Beschichtungsgemischs, eines sulfonierten Copolyesters, der im wesentlichen aus dem Kondensationsprodukt der folgenden Monomeren bzw. deren zur Bildung von Polyestern befähigten Derivaten besteht:

A) 65 bis 95 Mol-% Isophthalsäure,

B) 0 bis 30 Mol-% mindestens einer aliphatischen Dicarbonsäure mit der Formel $HOOC(CH_2)_nCOOH$, wobei n im Bereich von 1 bis 11 liegt,

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen,

2. 0,05 bis 3 Gew.-%, bezogen auf das Gesamtgewicht des Beschichtungsgemischs, mindestens eines wasserlöslichen Alkalisalzes einer Fettsäure mit 10 bis 18 Kohlenstoffatomen.

Ferner betrifft die Erfindung ein verbessertes Verfahren zur Herstellung einer orientierten thermoplastischen Folie, auf die eine als Haftvermittler für Metall wirkende Beschichtung aufgebracht ist, wobei

I. ein im wesentlichen amorphes thermoplastisches Harz durch eine Breitschlitzdüse extrudiert und anschließend zu einer thermoplastischen Vorfolie abgekühlt wird,

II. die thermoplastische Vorfolie dann in Längsrichtung zu einer uniaxial orientierten thermoplastischen Folie verstreckt wird,

III. die uniaxial orientierte thermoplastische Folie mit einem wäßrigen Beschichtungsgemisch enthaltend:

1. 1 bis 10 Gew.-%, bezogen auf das Gesamtgewicht des Beschichtungsgemischs, eines sulfonierten Copolyesters, der im wesentlichen aus dem Kondensationsprodukt der folgenden Monomeren bzw. deren zur Bildung von Polyestern befähigten Derivaten besteht:

A) 65 bis 95 Mol-% Isophthalsäure,

B) 0 bis 30 Mol-% mindestens einer aliphatischen Dicarbonsäure mit der Formel $HOOC(CH_2)_nCOOH$, wobei n im Bereich von 1 bis 11 liegt,

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen,

2. 0,05 bis 3 Gew.-%, bezogen auf das Gesamtgewicht des Beschichtungsgemischs, mindestens eines wasserlöslichen Alkalisalzes einer Fettsäure mit 10 bis 18 Kohlenstoffatomen, ein- oder zweiseitig beschichtet wird,

IV. die uniaxial orientierte thermoplastische Folie danach in Querrichtung verstreckt wird, so daß man eine biaxial orientierte thermoplastische Folie erhält, und

V. die biaxial orientierte thermoplastische Folie thermofixiert wird.

Schließlich betrifft die Erfindung noch eine metallisierte Folie mit einem Trägermaterial aus Kunststoff und einer in einer Trockenschichtdicke im Bereich von 0,0025 bis 0,25 µm einseitig oder beidseitig auf das Trägermaterial aufgebrachten Grundierbeschichtung, die im wesentlichen aus

1. dem Kondensationsprodukt der folgenden Monomeren bzw. deren zur Bildung von Polyestern befähigten Derivaten:

A) 65 bis 95 Mol-% Isophthalsäure;

B) 0 bis 30 Mol-% mindestens einer aliphatischen Dicarbonsäure mit der Formel $HOOC(CH_2)_nCOOH$, wobei n im Bereich von 1 bis 11 liegt;

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen und aus

2. mindestens einem wasserlöslichen Alkalisalz einer Fettsäure mit 10 bis 18 Kohlenstoffatomen besteht,

wobei diese Folie mit einer Metallbeschichtung in einer Dicke im Bereich von 2,5 bis 200 nm versehen ist.

Die orientierte thermoplastische Folie, die Teil dieser Erfindung ist, kann z.B. aus Polyester, Polyamid, Polycarbonat oder Polyolefin, z.B. Polyethylen und Polypropylen, bestehen. Vorzugsweise ist sie eine orientierte Polyesterfolie.

Die für diese Erfindung bevorzugte orientierte Polyesterfolie besteht aus Polyethylenterephthalat. Die Erfindung läßt sich jedoch auch für Polyesterfolien anwenden, die aus dem Polykondensationsprodukt eines Glykols wie z.B. Ethylenglykol oder Butandiol und deren Gemischen mit Terephthalsäure oder Gemischen aus Terephthalsäure und anderen Dicarbonsäuren wie z.B. Isophthalsäure, Diphensäure und Sebacinsäure oder deren polyesterbildenden Derivaten hergestellt werden. Diese Polyester werden nach bekannten Verfahren hergestellt. Für die Herstellung der Folie können die bekannten Verfahren und Vorrichtungen verwendet werden.

Es wird z.B. eine Polyesterschmelze bereitet, die als amorphe Folie auf eine hochglanzpolierte rotierende Gießwalze extrudiert wird, wo sie sich zur gegossenen Folie verfestigt. Die Folie wird anschließend axial gestreckt, und zwar bei einer monoaxial orientierten Folie in einer Richtung, d.h. entweder in Extrusionsrichtung (längs) oder senkrecht zur Extrusionsrichtung (quer), und bei einer biaxial orientierten Folie in zwei Richtungen, d.h. sowohl in Längs- als auch in Querrichtung. Beim ersten an der gegossenen Folie durchgeführten Streckschritt kann beliebig in einer dieser beiden rechtwinklig zueinander verlaufenden Richtungen gestreckt werden. Der Verstreckungsgrad, durch den die Folie Festigkeit und Zähigkeit erhält, kann etwa das 3- bis 5fache der ursprünglichen Abmessung der gegossenen Folie in einer oder beiden Richtungen betragen. Vorzugsweise liegt der Verstreckungsgrad im Bereich zwischen etwa dem 3,2- und 4,2-fachen der ursprünglichen Abmessung.

Die Streckvorgänge werden bei Temperaturen im Bereich etwa ab der Glastemperatur bis zu der Temperatur, bei der das Polymere weich wird und schmilzt, durchgeführt.

Nach dem Strecken wird die Folie, falls erforderlich, für die zur Kristallisation des Polyesters notwendige Dauer wärmebehandelt. Durch die Kristallisation erhält die Folie Festigkeit und gute Zugfestigkeitseigenschaften. Die Wärmebehandlung von Polyethylenterephthalat wird bei einer Temperatur im Bereich zwischen etwa 190 und 240°C, vorzugsweise zwischen etwa 215 und 235°C, durchgeführt.

Die Herstellung des zu dieser Erfindung gehörenden sulfonierten Copolyesters erfolgt zweckmäßigerweise durch Polykondensation von

(A) Isophthalsäure,

(B) einer aliphatischen Dicarbonsäure mit der Formel

$$HOOC(CH_2)_nCOOH,$$

wobei n im Bereich von 1 bis 11 liegt,

(C) einem Sulfomonomeren enthaltend eine Alkalimetallsulfonatgruppe an dem aromatischen Teil einer aromatischen Dicarbonsäure und

(D) wenigstens einem aliphatischen oder cycloaliphatischen Alkylenglykol mit 2 bis 11 Kohlenstoffatomen.

Die insgesamt anwesenden Säureäquivalente sollen auf molarer Basis im wesentlichen den insgesamt anwesenden Glykoläquivalenten entsprechen.

Als Komponente (B) der Copolyester geeignete Dicarbon- säuren sind z.B. Malon-, Adipin-, Azelain-, Glutar-, Sebacin-, Bernstein- und Brassylsäure sowie Mischungen dieser Säuren oder deren zur Bildung von Polyestern befähigten Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure (Komponente C) enthalten, sind solche Monomere, die der folgenden allgemeinen Formel entsprechen :

X–Z–Y
  |
$SO_3M$

In dieser Formel ist

| | |
|---|---|
| M | ein einwertiges Kation eines Alkalimetalls, |
| Z | ein dreiwertiger aromatischer Rest, und |
| X und Y | sind Carboxylgruppen oder Polyester bildende Äquivalente. |

Monomere dieser Art sind in US-A-3563942 und US-A-3779993 beschrieben. Beispiele solcher Monomeren sind Natrium-sulfoterephthalsäure, Natrium-5-sulfoisophthalsäure, Natrium-sulfophthalsäure, 5-(p-Natriumsulfophenoxy)-isophthalsäure, 5-(Natrium-sulfopropoxy)-isophthalsäure und dergleichen Monomere

sowie deren zur Bildung von Polyestern befähigte Derivate, wie z.B. die Dimethylester. M ist vorzugsweise $Na^+$, $Li^+$ oder $K^+$.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu diesen Gruppen zählen Carboxylgruppen sowie deren niedere Alkylester, z.B. Dimethylterephthalat, Diethylterephthalat und zahlreiche andere entsprechende Ester, Halogenide oder Salze. Bevorzugt werden die Säuremonomeren als Dimethylester verwendet, da auf diese Weise die Kondensationsreaktion besser gesteuert werden kann.

Als Komponente (D) geeignete Glykole sind z.B. Ethylenglykol, 1,5-Pentandiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester können durch bekannte Polykondensationstechniken hergestellt werden. Im allgemeinen wird so verfahren, daß die Säurekomponenten mit Glykol zusammengebracht und in Anwesenheit eines Veresterungskatalysators erhitzt werden, mit anschließender Zugabe eines Polykondensationskatalysators.

Die verhältnismäßigen Anteile der Komponenten (A), (B), (C) und (D), die zur Herstellung der unter diese Erfindung fallenden sulfonierten Copolyesters eingesetzt werden, sind entscheidend für das Erzielen einer beschichteten Folie mit zufriedenstellender Haftung gegenüber einem nach Metallisierungsverfahren aufgebrachten Metall. So muß z.B. Isophthalsäure (Komponente A) zu mindestens etwa 65 Mol-% als Säurekomponente anwesend sein. Bevorzugt ist die Komponente (A) in einer Menge von etwa 70 bis 95 Mol-% anwesend.

Für die Komponente (B) gilt, daß jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereichs beträgt bevorzugt 1 bis 20 Mol-%, bezogen auf die Säurekomponenten der Polyesterbeschichtung, wenn die Komponente (B) in der Zusammensetzung enthalten ist.

Das die Komponente (C) bildende Monomere soll in einer Menge von wenigstens 5 Mol-% in diesem System enthalten sein, damit die Grundierung mit Wasser dispergierbar wird. Bevorzugt liegt die Menge an Monomerem der Komponente (C) bei etwa 6,5 bis 12 Mol-%.

Die Glykolkomponente ist in ungefähr stöchiometrischer Menge anwesend.

Das unter diese Erfindung fallende sulfonierte Copolyesterharz zeichnet sich weiterhin dadurch aus, daß es eine Säurezahl unter 10, vorzugsweise von 0 bis 3, ein mittleres Mol-Gewicht unter etwa 50000 und einen RV-Wert (relative Viskosität, gemessen mit einem Kapillarviskosimeter nach Ubbelohde an einer 1%igen Lösung in Dichloressigsäure bei 25°C) im Bereich von etwa 30 bis 700, vorzugsweise etwa 350 bis 650, aufweist.

Polyesterfolien, die ein- oder beidseitig mit der oben beschriebenen sulfonierten Copolyesterbeschichtung versehen sind, sind aus US-A-4493872 bekannt.

Die erfindungsgemäß zusätzlich in der Beschichtung enthaltenen Alkalisalze können Alkalisalze von Fettsäuren mit 10 bis 18 Kohlenstoffatomen sein. Bevorzugt werden Salze von ungesättigten Fettsäuren, insbesondere Natriumoleat und Kaliumoleat. Weitere Alkalisalze, die für diese Erfindung geeignet sind, sind die Natrium- und Kaliumsalze von Palmitolein-, Ricinol- und Petroselinsäure.

Ein- oder beidseitig mit solchen oben beschriebenen Alkalisalzen beschichtete Polyesterfolien sind aus US-A-4486483 und US-A-4554200 bekannt.

Das erfindungsgemäße wäßrige Beschichtungsgemisch läßt sich zweckmäßigerweise so herstellen, daß zunächst eine wäßrige Dispersion des sulfonierten Copolyesters hergestellt wird, der dann die gewünschte Menge an Alkalisalz zugegeben wird.

Das unter die Erfindung fallende sulfonierte Copolyesterharz bildet eine wäßrige Dispersion. Zur Herstellung der Dispersion gibt man die gewünschte Menge an sulfoniertem Copolyester (z.B. in Form von Chips oder Pellets) in Wasser, das auf 90 bis 95°C erwärmt wurde, und rührt anschließend ca. 30 bis 45 min.

Das erfindungsgemäße Beschichtungsgemisch läßt sich auf einfache Weise herstellen, indem der wäßrigen Dispersion des sulfonierten Copolyesters die gewünschte Menge eines Alkalisalzes einer Fettsäure zugegeben wird. Durch Wärmeeinwirkung und Rühren kann die Bildung einer homogenen Lösung gefördert werden.

Die erfindungsgemäßen wäßrigen Beschichtungsgemische können nach den auf dem Gebiet der Folienherstellung verwendeten bekannten Beschichtungsverfahren auf die orientierte thermoplastische Folie aufgebracht werden. Das Beschichten kann z.B. durch Walzenbeschichtung, Sprühbeschichtung, Schlitzgießerantrag oder Tauchbeschichtung erfolgen. Bevorzugt wird die thermoplastische Folie mit Gravurwalzen beschichtet. Vor dem Beschichten wird die Folienoberfläche vorzugsweise einer Coronabehandlung in einer Coronaentladevorrichtung unterzogen wie z.B. in US-A-3520959, US-A-3820939 und US-A-4,028032 beschrieben. Die Coronabehandlung verringert die Hydrophobie der thermoplastischen Folienoberfläche, wodurch die wäßrige Beschichtung die Oberfläche besser benetzen kann. Dadurch wird die Haftung der

Beschichtung an der Folienoberfläche verbessert.

Das erfindungsgemäße wäßrige Beschichtungsgemisch kann in jedem Stadium der Folienherstellung inline auf die thermoplastische Folie aufgebracht werden, und zwar im Stadium vor dem Strecken zum Zeitpunkt zwischen dem Vergießen der amorphen Folie und dem ersten Strecken, wie es z.B. in GB-B-1411564 beschrieben ist, oder im Stadium zwischen den Streckvorgängen, d.h. nach dem uniaxialen Strecken, jedoch vor dem biaxialen Strecken, wie es z.B. in US-A-4214035 beschrieben ist. Die der Folie während des Streckens oder den abschließenden Konditionierstufen zugeführte Wärme reicht normalerweise aus, um das Wasser und andere flüchtige Bestandteile aus der Beschichtung zu vertreiben und diese zu trocknen. Die Beschichtung kann auch nach den Streckvorgängen (off-line) auf die fertige biaxial orientierte Folie aufgebracht werden. Bei einem solchen Auftragsverfahren ist ein gesonderter Trocknungsschritt erforderlich.

Das erfindungsgemäße wäßrige Beschichtungsgemisch kann so auf eine thermoplastische Trägerfolie aufgebracht werden, daß sich eine Trockenschichtdicke im Bereich von etwa 0,0025 bis 0,25 µm ergibt ; das entspricht einem Trockenschichtgewicht von 0,00305 bis 0,305 g/m². Bevorzugt hat die getrocknete Beschichtung eine Dicke im Bereich von 0,02 bis 0,051 µm.

Das wäßrige Beschichtungsgemisch kann ein- oder beidseitig auf die Folie aufgebracht werden. Es ist aber auch möglich, eine Seite der Folie mit der Copolyesterbeschichtung und die Gegenseite mit einer anderen Beschichtung zu versehen wie z.B. einer wärmehärtenden Acryl- oder Methacrylbeschichtung gemäß US-A-4214035. Gelegentlich kann es auch wünschenswert sein, in den Ansatz der Copolyesterbeschichtung ein Härtungsmittel einzubeziehen, z.B. etwa 1 bis 20 Gew.-% eines Melamin- oder Harnstoff-Formaldehyd-Kondensationsproduktes, wodurch die Eigenschaften der Grundierbeschichtung weiter modifiziert werden. Der Beschichtungsansatz kann weiterhin andere bekannte Zusätze wie z.B. Antistatika, Netzmittel, Tenside, pH-Regulatoren, Antioxidantien, Farbstoffe, Pigmente, Anti-Blockmittel wie z.B. kolloidales $SiO_2$ usw. enthalten.

Der sulfonierte Copolyester, der Teil dieser Erfindung ist, wie auch die unter diese Erfindung fallenden Alkalisalze von Fettsäuren haben eine sehr gute Wärmestabilität, deshalb sind die mit dem erfindungsgemäßen wäßrigen Beschichtungsgemisch beschichteten thermoplastischen Folien gut regenerierbar. Der bei der Herstellung der Folien anfallende Abfall an beschichteter Folie kann daher mit frischem Polymerem, z.B. Polyesterpolymerem, gemischt, wieder geschmolzen und zur Herstellung von orientierter Folie erneut in den Folienextruder eingefüllt werden. Auf diese Art hergestellte Folien mit einem Gehalt von bis zu etwa 70 Gew.-% an Regenerat aus bereits beschichtetem Abfall erweisen sich als gut in Qualität, Farbe und Aussehen und zeigen höchstens einen sehr geringen wahrnehmbaren Abbau der Eigenschaften durch die von der Beschichtung herrührende Verunreinigung. Die beschichtete Folie dieser Erfindung bietet also dem Folienhersteller einen deutlichen wirtschaftlichen Vorteil gegenüber vielen anderen beschichteten Folien wie z.B. Folien, die mit Vinylidenchlorid enthaltenden Polymeren beschichtet sind, wie in US-A-2627088 und US-A-2698240 beschrieben, die zum Polymerenabbau und zur Verfärbung neigen, wenn sie wie oben angegeben wiedergewonnen werden.

Eine mit dem erfindungsgemäßen wäßrigen Beschichtungsgemisch versehene thermoplastische Folie, z.B. eine Polyesterfolie, eignet sich ausgezeichnet als Träger für metallische Schichten, insbesondere für Metallisierung. Derartige Folien werden nach bekannten Techniken hergestellt. Es wird beispielsweise auf einer Oberfläche der beschichteten Polyesterfolie eine Metallbeschichtung erzeugt, indem man nach einer Vakuumaufdampftechnik einen Strom von Metalldampf oder Metallatomen auf die Folienoberfläche richtet. Zu diesem Zweck wird das Metall entweder im Hochvakuum, vorzugsweise zwischen etwa $1{,}33 \cdot 10^{-3}$ und $1{,}33 \cdot 10^{-5}$ m·bar, auf eine Temperatur oberhalb seines Schmelzpunktes erhitzt, so daß der Dampfdruck des Metalls über etwa $1{,}33 \cdot 10^{-2}$ m·bar liegt, oder das Metall wird mit Ionen beschossen, wobei der Festkörper Metall durch das "Sputter-Verfahren" zerstäubt wird. Sobald diese Bedingungen eingetreten sind, verdampft oder zerstäubt das Metall und sendet in alle Richtungen Metalldampf oder Metallatome aus. Diese Dämpfe oder Atome treffen auf die Folienoberfläche auf, wo sie kondensieren und dabei eine dünne Metallschicht auf der Folie bilden. Für dieses Verfahren können Zink, Nickel, Silber, Kupfer, Gold, Indium, Zinn, Edelstahl, Chrom, Titan und bevorzugt Aluminium sowie die Oxide dieser Metalle angewendet werden.

Die Dicke der aufgebrachten Metallschicht liegt im Bereich von 2,5 bis 200 nm und richtet sich nach der Endverwendung der metallisierten Folie. Die Dicken von Aluminium liegen für Verpackungszwecke bei etwa 30 bis 60 nm, während für den Einsatz in getönten Sonnenfiltern im allgemeinen Dicken unter 10 nm in Frage kommen.

Die nachfolgenden Beispiele erläutern die praktische Anwendung und die Vorteile bestimmter Ausführungen dieser Erfindung. Durch diese bestimmten Ausführungen sollen die Ansprüche jedoch in keiner Weise eingeschränkt werden.

Beispiel 1

Auswertung verschiedener wäßriger Beschichtungsgemische

Mehrere wäßrige Beschichtungsgemische wurden ausgehend von Stammlösungen eines wäßrigen, geklärten sulfonierten Copolyesters und eines 0,75%igen wäßrigen Natriumoleats hergestellt.

Der sulfonierte Copolyester enthielt ungefähr 90 Mol-% Isophthalsäure, 10 Mol-% des Natriumsalzes der 5-Sulfoisophthalsäure und 100 Mol-% Ethylenglykol und wurde nach den in US-A-4493872 angegebenen allgemeinen Verfahren hergestellt. Es wurde eine 5%ige Stammlösung bereitet und nach den oben beschriebenen Klärungsverfahren geklärt.

Die folgenden neun wäßrigen Beschichtungslösungen wurden hergestellt:

| Lösung | sulfonierter Copolyester % | Natriumoleat % |
|---|---|---|
| A | 5,0 | 0 |
| B | 4,9 | 0,015 |
| C | 4,75 | 0,0375 |
| D | 3,75 | 0,1875 |
| E | 2,5 | 0,375 |
| F | 1,25 | 0,3625 |
| G | 0,5 | 0,65 |
| H | 0,1 | 0,735 |
| I | 0 | 0,75 |

Eine Schmelze aus Polyethylenterephthalatpolymeren wurde durch eine Breitschlitzdüse auf eine auf ca. 20°C gehaltene Gießtrommel extrudiert, wo sie zu einer Polyestervorfolie erstarrte. Die Polyestervorfolie wurde bei ca. 80°C im Streckverhältnis von ca. 3,5 : 1 längsgestreckt.

Die uniaxial orientierte Polyesterfolie wurde mit ca. 500 mWsec/m$^2$ beidseitig coronabehandelt und dann jeweils mit einer der oben beschriebenen wäßrigen Beschichtungslösungen beschichtet.

Anschließend wurde die beschichtete Folie im Streckverhältnis von 3,9 : 1 quergestreckt und bei einer Temperatur von maximal 230°C thermofixiert. Man erhielt eine biaxial orientierte Folie mit einer Nenndicke von ca. 12 µm.

Proben der so hergestellten Reihe beschichteter, biaxial orientierter Polyesterfolien wurden in bezug auf Metallhaftung, Blockverhalten und Farbenhaftung ausgewertet.

Metallhaftung

Zur Beurteilung der Metallhaftung wurden die Folienproben in eine 300 mm-Labor-Vakuumbedampfungsanlage eingebracht. Die Vakuumkammer wurde auf unter ca. $10^{-4}$ m · bar evakuiert, und ca. 50 nm Aluminium wurden von einem Wolframdraht auf die beschichtete Seite der Folienprobe aufgedampft.

Nach der Entnahme aus der Vakuumkammer wurde jede Probenoberfläche innerhalb von 30 min auf Metallabrieb geprüft. Dazu wurde die Metalloberfläche der Proben mit einem Baumwollappen jeweils mit der gleichen Anzahl von Strichen und ungefähr mit dem gleichen Andruck überrieben. Zur weiteren Beurteilung der Proben wurde eine Ethylenvinylacetatfolie durch Heißsiegeln bei einer Temperatur von ca. 105°C, einem Druck von 0,276 Nmm$^{-2}$ und einer Dauer von 2 sec auf die metallisierte Polyethylenterephthalatfolie aufgebracht. Die beiden Folien wurden dann wieder voneinander getrennt und festgestellt, wieviel Metall sich durch die Schichtentrennung von der Polyethylenterephthalatfolie abgelöst hatte.

Beurteilung des Blockverhaltens

Die Neigung der beschichteten Polyesterfolien zum Blocken wurde nach zwei Verfahren beurteilt: nach

dem Prüfverfahren TP-4 der "Flexible Packaging Association" und einem "Wasserflecktest". Beim "Wasserfleck"-Blocktest wird ein kleiner Tropfen Leitungswasser auf die horizontale Oberfläche der Folienprobe aufgebracht, die dann mit einem zweiten Folienstreifen abgedeckt wird. Man läßt die Folienproben ohne Druckbeaufschlagung über Nacht liegen. Die Kraft, die erforderlich ist, um die obere Folie von der unteren Folienprobe zu trennen, wird dann qualitativ gemessen.

Farbenhaftung

Frische Proben der wie oben beschrieben hergestellten beschichteten Polyesterfolien wurden mit Hilfe zweier verschiedener Farbensysteme auf ihr Haftvermögen gegenüber Farben geprüft. Dazu wurden die Farben mit einem "Pamarro"-Handprüfgerät nach einem Aufstreichverfahren auf Probenabschnitte aufgebracht und anschließend mindestens 1 min bei 140°C in einem Gebläseofen getrocknet. Auf die getrocknete eingefärbte Oberfläche wurde ein Klebestreifen ((R)Scotch Brand No. 610) aufgedrückt, mit dem Finger fest angerieben und dann rasch von der Folie abgezogen. Die Farbmenge, die auf der Fläche zurückbleibt, die unter dem Klebestreifen lag, wird dabei als Prozentanteil der Fläche ausgedrückt, d.h. keine Farbe abgezogen = 100% Haftung, sämtliche Farbe abgezogen = 0% Haftung, wobei die dazwischenliegenden Haftwerte jeweils nach dem Anteil der auf der Folie verbliebenen Farbe qualitativ bestimmt werden.

Tabelle I - Metallhaftung

| Probe | Baumwollappen | Heißsiegelung mit Ethylenvinylacetatfolie und Schichtentrennung |
|---|---|---|
| unbeschichtete Vergleichsprobe | gut | gut |
| A | sehr gut | gut |
| B | sehr gut | sehr gut |
| C | sehr gut | sehr gut |
| D | sehr gut | sehr gut |
| E | sehr gut | sehr gut |
| F | sehr gut | sehr gut |
| G | sehr gut | gut |
| H | sehr gut | gut |
| I | sehr gut | gut |

Erläuterungen :

"sehr gut" bedeutet : Beim Betrachten der Folienprobe war nicht zu erkennen, daß Metall von der Probenoberfläche entfernt wurde.

"gut" bedeutet : Es war zu erkennen, daß eine geringe Metallmenge von der Oberfläche der Folienprobe entfernt wurde.

"schlecht" bedeutet : Es war zu erkennen, daß eine erheblich Menge Metall von der Oberfläche der Folienprobe entfernt wurde.

Tabelle II - Beurteilung des Blockverhaltens

| Probe | TP-4-Test | "Wasserflecktest" |
|---|---|---|
| unbeschicht. Vergl./ unbeschicht. Vergl. | 0 | 0 |
| A/A | 1,3 | 5 |
| A/unbesch. Vergleichspr. | 1,0 | 2 |
| B/B | 0,66 | 4 |
| B/unbesch. Vergleichspr. | 0,33 | 4 |
| C/C | 1,33 | 4 |
| C/unbesch. Vergleichspr. | 0 | 1 |
| D/D | 0,66 | 2 |
| D/unbesch. Vergleichspr. | 0 | 0 |
| E/E | 1,0 | 4 |
| E/unbesch. Vergleichspr. | 1,0 | 0 |
| F/F | 0,66 | 2 |
| F/unbesch. Vergleichspr. | 0 | 1 |
| G/G | 0,66 | 2 |
| G/unbesch. Vergleichspr. | 0 | 1 |
| H/H | 0 | 0 |
| H/unbesch. Vergleichspr. | 0 | 0 |
| I/I | 0 | 1 |
| I/unbesch. Vergleichspr. | 0 | 0 |

Erläuterungen :

0 = kein Blocken
1 = leichtes Kleben
2 = Kleben
3 = leichtes Blocken
4 = starkes Blocken
5 = vollständiges Blocken

Tabelle III - Farbenhaftung

| Probe | Crown Zellerbach FMB-Rot % | GPI Sunester Blau % |
|---|---|---|
| Vergleichsprobe aus unbeschichtetem Polyester | 50 | 50 |
| A | 99 | 100 |
| B | 100 | 100 |
| C | 99 | 100 |
| D | 99 | 100 |
| E | 99 | 100 |
| F | 100 | 100 |
| G | 95 | 100 |
| H | 90 | 100 |
| I | 75 | 99 |

Beispiel 2

Auswertung unterschiedlicher wäßriger Beschichtungsgemische

Es wurde eine weitere Reihe wäßriger Beschichtungsgemische hergestellt und in-line auf Polyesterfolie aufgebracht. Der Gehalt der Gemische an sulfoniertem Copolyester und an Natriumoleat in Gewichtsprozent ist nachfolgend angegeben :

| wäßriges Beschichtungsgemisch | sulfonierter Copolyester | Natriumoleat |
|---|---|---|
| A | 0 | 0 |
| B | 5 | 0 |
| C | 4,5 | 0,075 |
| D | 4,0 | 0,15 |
| E | 3,75 | 0,1875 |
| F | 3,5 | 0,22 |
| G | 3,0 | 0,30 |
| H | 2,5 | 0,375 |
| I | 2,0 | 0,45 |
| J | 1,5 | 0,525 |
| K | 1,25 | 0,5625 |
| L | 1,0 | 0,60 |
| M | 0,50 | 0,66 |
| N | 0 | 0,75 |

Die grundierbeschichteten Polyesterfolien wurden wie oben beschrieben auf Metallhaftung, Blockverhalten und Farbenhaftung geprüft. Die Ergebnisse dieser Prüfungen sind aus den Tabellen IV bis VI ersichtlich.

Tabelle IV - Metallhaftung

| wäßriges Beschichtungsgemisch | sulfonierter Copolyester x) | Natriumoleat x) | Kaschieren mit Ethylenvinylacetatfolie/Schichtentrennung |
|---|---|---|---|
| A | 0 | 0 | gut |
| B | 5,0 | 0 | sehr gut |
| C | 4,5 | 0,075 | gut |
| D | 4,0 | 0,15 | sehr gut |
| E | 3,75 | 0,1875 | gut |
| F | 3,5 | 0,22 | gut |
| G | 3,0 | 0,30 | sehr gut |
| H | 2,5 | 0,375 | sehr gut |
| I | 2,0 | 0,45 | gut |
| J | 1,5 | 0,525 | senr gut |
| K | 1,25 | 0,5625 | gut |
| L | 1,0 | 0,60 | gut |
| M | 0,5 | 0,66 | schlecht |
| N | 0 | 0,75 | schlecht |

Erläuterungen :

"sehr gut" bedeutet : Beim Betrachten der Folienprobe war nicht zu erkennen, daß Metall von der Probenoberfläche entfernt wurde.

"gut" bedeutet : Es war zu erkennen, daß eine geringe Metallmenge von der Oberfläche der Folienprobe entfernt wurde.

"schlecht" bedeutet : Es war zu erkennen, daß eine erhebliche Menge Metall von der Oberfläche der Folienprobe entfernt wurde.

x) ausgedrückt in Gewichtsprozent, bezogen auf das Gesamtgewicht des wäßrigen Beschichtungsgemischs

Tabelle V - Blockverhalten

| Probe | 21 g/mm² | | 138 g/mm² | |
|---|---|---|---|---|
| | besch./besch. | besch./unb. | besch./besch. | besch./unb. |
| A | | | | |
| B | 1,33 | 0,66 | 2,33 | 1,33 |
| C | 1,66 | 1 | 2,33 | 2,00 |
| D | 1,33 | 1 | 2,00 | 2,00 |
| E | 0,66 | 0,33 | 2,00 | 1,33 |
| F | 0,33 | 0,33 | 0,66 | 1,33 |
| G | 0,66 | 0 | 2,00 | 1,00 |
| H | 0,66 | 0 | 1,66 | 1,33 |
| I | 0,33 | 0,33 | 0,66 | 1,00 |
| J | 0 | 0 | 0 | 0,33 |
| K | 0 | 0 | 0 | 0 |
| L | 0 | 0 | 0 | 0 |
| M | 0 | 0 | 0 | 0 |
| N | 0 | 0 | 0 | 0 |

Erläuterungen :

0 = kein Blocken
1 = leichtes Kleben
2 = Kleben
3 = leichtes Blocken
4 = starkes Blocken
5 = vollständiges Blocken

Tabelle VI - Farbenhaftung

| Probe | Crown Zellerbach FMB-Rot % | GPI Sunester Blau % |
|---|---|---|
| A | 50 | 50 |
| B | 100 | 100 |
| C | 100 | 100 |
| D | 99 | 100 |
| E | 99 | 100 |
| F | 100 | 100 |
| G | 98 | 97 |
| H | 100 | 100 |
| I | 100 | 100 |
| J | 95 | 100 |
| K | 99 | 100 |
| L | 100 | 100 |
| M | 100 | 99 |
| N | 99 | 100 |

----------

**Patentansprüche**

1. Beschichtungsgemisch für thermoplastische Folien aus Kunststoff, dadurch gekennzeichnet, daß das Gemisch folgende Komponenten enthält:

I. 1 bis 10 Gew.-%, bezogen auf das Gesamtgewicht des Beschichtungsgemischs, eines sulfonierten Copolyesters, der im wesentlichen aus dem Kondensationsprodukt der folgenden Monomeren bzw. deren zur Bildung von Polyestern befähigten Derivaten besteht:

A) 65 bis 95 Mol-% Isophthalsäure,

B) 0 bis 30 Mol-% mindestens einer aliphatischen Dicarbonsäure mit der Formel $HOOC(CH_2)_nCOOH$, wobei n im Bereich von 1 bis 11 liegt,

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen,

II. 0,05 bis 3 Gew.-%, bezogen auf das Gesamtgewicht des Beschichtungsgemischs, mindestens eines wasserlöslichen Alkalisalzes einer Fettsäure mit 10 bis 18 Kohlenstoffatomen.

2. Beschichtungsgemisch gemäß Anspruch 1, dadurch gekennzeichnet, daß als Komponente (B) Malon-, Adipin-, Azelain-, Glutar-, Sebacin-, Bernstein- oder Brassylsäure sowie Mischungen dieser Säuren oder deren zur Bildung von Polyestern befähigte Derivate in dem Gemisch enthalten sind, daß als Komponente (C) Natriumsulfoterephthalsäure, Natrium-5-sulfoisophthalsäure, Natriumsulfophthalsäure, 5-(p-Natriumsulfophenoxy)-isophthalsäure, 5-(Natrium-sulfopropoxy)-isophthalsäure sowie deren zur Bildung von Polyestern befähigte Derivate, wie z.B. die Dimethylester, in dem Gemisch enthalten sind, daß als Komponente (D)

Ethylenglykol, 1,5-Pentandiol, 1,6-Hexandiol, Neopentylglykol, 1,10-Decandiol, Cyclohexan-dimethanol in dem Gemisch enthalten sind und daß als Komponente II Natriumoleat oder Kaliumoleat in dem Gemisch enthalten sind.

3. Orientierte thermoplastische Folie, die mindestens einseitig mit einer als Haftvermittler für Metall wirkenden Beschichtung versehen ist, dadurch gekennzeichnet, daß die Beschichtung in Form eines wäßrigen Beschichtungsgemischs aufgebracht wird, das sich aus den folgenden Komponenten zusammensetzt :

I. 1 bis 10 Gew.-%, bezogen auf das Gesamtgewicht des Beschichtungsgemischs, eines sulfonierten Copolyesters, der im wesentlichen aus dem Kondensationsprodukt der folgenden Monomeren bzw. deren zur Bildung von Polyestern befähigten Derivaten besteht :

A) 65 bis 95 Mol-% Isophthalsäure,

B) 0 bis 30 Mol-% mindestens einer aliphatischen Dicarbonsäure mit der Formel $HOOC(CH_2)_nCOOH$, wobei n im Bereich von 1 bis 11 liegt,

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen,

II. 0,05 bis 3 Gew.-%, bezogen auf das Gesamtgewicht des Beschichtungsgemisches, mindestens eines wasserlöslichen Alkalisalzes einer Fettsäure mit 10 bis 18 Kohlenstoffatomen.

4. Folie gemäß Anspruch 3, dadurch gekennzeichnet, daß sie eine durch Extrusion hergestellte Folie aus Polyester, Polyamid, Polycarbonat oder Polyolefin, wie Polyethylen oder Polypropylen, ist.

5. Folie nach Anspruch 4, dadurch gekennzeichnet, daß sie eine biaxial orientierte Polyethylenterephthalatfolie ist.

6. Verfahren zur Herstellung einer orientierten thermoplastischen Folie, auf die eine als Haftvermittler für Metall wirkende Beschichtung aufgebracht ist, bei dem

i. ein im wesentlichen amorphes thermoplastisches Harz durch eine Breitschlitzdüse extrudiert und anschließend zu einer thermoplastischen Vorfolie abgekühlt wird,

ii. die thermoplastische Vorfolie dann in Längsrichtung zu einer uniaxial orientierten thermoplastischen Folie verstreckt wird,

iii. die uniaxial orientierte thermoplastische Folie mit einem wäßrigen Beschichtungsgemisch beschichtet wird,

iv. die uniaxial orientierte thermoplastische Folie danach in Querrichtung verstreckt wird, so daß man eine biaxial orientierte thermoplastische Folie erhält, und

v. die biaxial orientierte thermoplastische Folie thermofixiert wird, dadurch gekennzeichnet, daß das wäßrige Beschichtungsgemisch wenigstens folgende Bestandteile enthält :

I. 1 bis 10 Gew.-%, bezogen auf das Gesamtgewicht des Beschichtungsgemischs, eines sulfonierten Copolyesters, der im wesentlichen aus dem Kondensationsprodukt der folgenden Monomeren bzw. deren zur Bildung von Polyestern befähigten Derivaten besteht :

A) 65 bis 95 Mol-% Isophthalsäure,

B) 0 bis 30 Mol-% mindestens einer aliphatischen Dicarbonsäure mit der Formel $HOOC(CH_2)_nCOOH$, wobei n im Bereich von 1 bis 11 liegt,

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen,

II. 0,05 bis 3 Gew.-%, bezogen auf das Gesamtgewicht des Beschichtungsgemischs, mindestens eines wasserlöslichen Alkalisalzes einer Fettsäure mit 10 bis 18 Kohlenstoffatomen.

7. Metallisierte Folie mit einem Trägermaterial aus Kunststoff und einer in einer Trockenschichtdicke im Bereich von 0,0025 bis 0,25 µm einseitig oder beidseitig auf das Trägermaterial aufgebrachten Grundierbeschichtung, dadurch gekennzeichnet, daß die Grundierbeschichtung im wesentlichen aus

I. dem Kondensationsprodukt der folgenden Monomeren bzw. deren zur Bildung von Polyestern befähigten Derivaten :

A) 65 bis 95 Mol-% Isophthalsäure ;

B) 0 bis 30 Mol-% mindestens einer aliphatischen Dicarbonsäure mit der Formel $HOOC(CH_2)_nCOOH$, wobei n im Bereich von 1 bis 11 liegt ;

C) 5 bis 15 Mol-% mindestens eines Sulfomonomeren mit einer an den aromatischen Teil einer aromatischen Dicarbonsäure gebundenen Alkalisulfonatgruppe und

D) der zur Bildung von 100 Mol-% Kondensat notwendigen stöchiometrischen Menge mindestens eines copolymerisierbaren aliphatischen oder cycloaliphatischen Alkylenglykols mit 2 bis 11 Kohlenstoffatomen ;

und

II. aus mindestens einem wasserlöslichen Alkalisalz einer Fettsäure mit 10 bis 18 Kohlenstoffatomen besteht ; wobei diese Folie mit einer Metallbeschichtung in einer Dicke im Bereich von 2,5 bis 200 nm versehen ist.

## Claims

1. Coating composition for thermoplastic films of plastics, wherein the composition comprises the following components :

I. from 1 to 10 weight percent, based upon the total weight of the coating composition, of a sulfonated copolyester consisting essentially of the condensation product of the following monomers or their derivatives capable of forming polyesters :

A) 65 to 95 mole percent of isophthalic acid,

B) 0 to 30 mole percent of at least one aliphatic dicarboxylic acid of the formula $HOOC(CH_2)_nCOOH$, wherein n ranges from 1 to 11,

C) 5 to 15 mole percent of at least one sulfomonomer containing an alkali metal sulfonate group attached to the aromatic nucleus of an aromatic dicarboxylic acid, and

D) the stoichiometric quantity required for forming 100 mole percent of condensate of at least one copolymerizable aliphatic or cycloaliphatic alkylene glycol having from 2 to 11 carbon atoms,

II. from 0.05 to 3 weight percent, based upon the total weight of the coating composition, of at least one water-soluble alkali metal salt of a fatty acid having from 10 to 18 carbon atoms.

2. The coating composition as claimed in claim 1, wherein component (B) contained in the composition comprises malonic, adipic, azelaic, glutaric, sebacic, succinic or brassylic acid or mixtures of these acids or their derivatives capable of forming polyesters, wherein component (C) contained in the composition comprises sodium sulfoterephthalic acid, sodium 5-sulfoisophthalic acid, sodium sulfophthalic acid, 5-(p-sodiosulfophenoxy)-isophthalic acid, 5-(sodiosulfopropoxy)-isophthalic acid or their derivatives capable of forming polyesters such as, for example dimethyl ester, wherein component (D) contained in the composition comprises ethylene glycol, 1,5-pentanediol, 1,6-hexanediol, neopentyl glycol, 1,10-decanediol, cyclohexane dimethanol, and wherein component II contained in the composition comprises sodium oleate or potassium oleate.

3. Oriented thermoplastic film having a metal-adhesion promoting coating on at least one side, wherein the coating is applied in the form of an aqueous coating composition comprising the following components :

I. from 1 to 10 weight percent, based upon the total weight of the coating composition, of a sulfonated copolyester consisting essentially of the condensation product of the following monomers or their derivatives capable of forming polyesters :

A) 65 to 95 mole percent of isophthalic acid,

B) 0 to 30 mole percent of at least one aliphatic dicarboxylic acid of the formula $HOOC(CH_2)_nCOOH$, wherein n ranges from 1 to 11,

C) 5 to 15 mole percent of at least one sulfomonomer containing an alkali metal sulfonate group attached to the aromatic nucleus of an aromatic dicarboxylic acid, and

D) the stoichiometric quantity required for forming 100 mole percent of condensate of at least one copolymerizable aliphatic or cycloaliphatic alkylene glycol having from 2 to 11 carbon atoms,

II. from 0.05 to 3 weight percent, based upon the total weight of the coating composition, of at least one water-soluble alkali metal salt of a fatty acid having from 10 to 18 carbon atoms.

4. The film as claimed in claim 3, wherein said film is manufactured by an extrusion process from polyester, polyamide, polycarbonate, or polyolefin, for example polyethylene or polypropylene.

5. The film as claimed in claim 4, wherein said film is a biaxially oriented polyethylene terephthalate film.

6. Method for manufacturing an oriented thermoplastic film to which a metal-adhesion promoting coating is applied, said method comprising

i. extruding a substantially amorphous thermoplastic resin through a flat-sheet die and subsequently cooling said resin to form cast thermoplastic sheet,

ii. subsequently stretching said thermoplastic cast sheet in the longitudinal direction, thereby forming

a monoaxially oriented thermoplastic film,

iii. coating said monoaxially oriented thermoplastic film with an aqueous coating composition,

iv. thereafter stretching said monoaxially oriented thermoplastic film in the transverse direction, thereby forming a biaxially oriented thermoplastic film, and

v. heatsetting said biaxially oriented thermoplastic film, wherein said aqueous coating composition contains at least the following components :

I. from 1 to 10 weight percent, based upon the total weight of the coating composition, of a sulfonated copolyester consisting essentially of the condensation product of the following monomers or their derivatives capable of forming polyesters :

A) 65 to 95 mole percent of isophthalic acid,

B) 0 to 30 mole percent of at least one aliphatic dicarboxylic acid of the formula $HOOC(CH_2)_nCOOH$, wherein n ranges from 1 to 11,

C) 5 to 15 mole percent of at least one sulfomonomer containing an alkali metal sulfonate group attached to the aromatic nucleus of an aromatic dicarboxylic acid, and

D) the stoichiometric quantity required for forming 100 mole percent of condensate of at least one copolymerizable aliphatic or cycloaliphatic alkylene glycol having from 2 to 11 carbon atoms,

II. from 0.05 to 3 weight percent, based upon the total weight of the coating composition, of at least one water-soluble alkali metal salt of a fatty acid having from 10 to 18 carbon atoms.

7. Metallized film comprising a base material made of a plastic and a primer coating applied to one or both sides of said base material at a dry layer thickness in the range from 0.0025 to 0.25 µm, wherein said primer coating consists essentially of

I. the condensation product of the following monomers or their derivatives capable of forming polyesters :

A) 65 to 95 mole percent of isophthalic acid,

B) 0 to 30 mole percent of at least one aliphatic dicarboxylic acid of the formula $HOOC(CH_2)_nCOOH$, wherein n ranges from 1 to 11,

C) 5 to 15 mole percent of at least one sulfomonomer containing an alkali metal sulfonate group attached to the aromatic nucleus of an aromatic dicarboxylic acid, and

D) the stoichiometric quantity required for forming 100 mole percent of condensate of at least one copolymerizable aliphatic or cycloaliphatic alkylene glycol having from 2 to 11 carbon atoms,

and

II. at least one water-soluble alkali metal salt of a fatty acid having from 10 to 18 carbon atoms ; said film being provided with a metal coating having a thickness in the range from 2.5 to 200 nm.

## Revendications

1. Composition de revêtement pour pellicules thermoplastiques en matière plastique, caractérisée en ce que la composition contient les composants suivants :

I. de 1 à 10% en poids, par rapport au poids total de la composition de revêtement, d'un copolyester sulfoné qui est essentiellement constitué du produit de condensation des monomères suivants ou de leurs dérivés aptes à la formation de polyesters :

A) de 65 à 95% en moles d'acide isophtalique,

B) de 0 à 30% en moles d'au moins un acide dicarboxylique aliphatique de formule $HOOC(CH_2)_nCOOH$, n étant dans la plage de 1 à 11,

C) de 5 à 15% en moles d'au moins un monomère sulfoné comportant un groupe sulfonate alcalin lié au fragment aromatique d'un acide dicarboxylique aromatique, et

D) la quantité stoechiométrique, requise pour la formation de 100% en moles de produit de condensation, d'au moins un alkylèneglycol copolymérisable, aliphatique ou cycloaliphatique, ayant de 2 à 11 atomes de carbone,

II. de 0,05 à 3% en poids, par rapport au poids total de la composition de revêtement, d'au moins un sel alcalin, soluble dans l'eau, d'un acide gras ayant de 10 à 18 atomes de carbone.

2. Composition de revêtement selon la revendication 1, caractérisée en ce que sont contenus dans la composition, en tant que composant (B), l'acide malonique, adipique, azélaïque, glutarique, sébacique, succinique ou brassylique, ainsi que des mélanges de ces acides ou leurs dérivés aptes à la formation de polyesters, en ce que sont contenus dans la composition, en tant que composant (C) l'acide (sulfonate de sodium)-téréphtalique, l'acide 5-(sulfonate de sodium)-isophtalique, l'acide (sulfonate de sodium)-phtalique, l'acide 5-[(p-sulfonate de sodium)-phénoxy]-isophtalique, l'acide 5-[(sulfonate de sodium)-propoxy]-isophtalique ainsi que

leurs dérivés aptes à la formation de polyesters, comme par exemple les esters diméthyliques, en ce que sont contenus dans la composition, en tant que composant (D), l'éthylèneglycol, le 1,5-pentanediol, le 1,6-hexanediol, le néopentylglycol, le 1,10-décanediol, le cyclohexane-diméthanol, et en ce que sont contenus dans la composition, en tant que composant II, l'oléate de sodium ou l'oléate de potassium.

3. Pellicule thermoplastique orientée, qui est munie, au moins sur un côté, d'un revêtement agissant en tant qu'agent favorisant l'adhérence pour métal, caractérisée en ce que le revêtement est appliqué sous forme d'une composition aqueuse de revêtement qui est composée des composants suivants :

I. de 1 à 10% en poids, par rapport au poids total de la composition de revêtement, d'un copolyester sulfoné qui est essentiellement constitué du produit de condensation des monomères suivants ou de leurs dérivés aptes à la formation de polyesters :

A) de 65 à 95% en moles d'acide isophtalique,

B) de 0 à 30% en moles d'au moins un acide dicarboxylique aliphatique de formule $HOOC(CH_2)_nCOOH$, n étant dans la plage de 1 à 11,

C) de 5 à 15% en moles d'au moins un monomère sulfoné comportant un groupe sulfonate alcalin lié au fragment aromatique d'un acide dicarboxylique aromatique, et

D) la quantité stoechiométrique, requise pour la formation de 100% en moles de produit de condensation, d'au moins un alkylèneglycol copolymérisable, aliphatique ou cycloaliphatique, ayant de 2 à 11 atomes de carbone,

II. de 0,05 à 3% en poids, par rapport au poids total de la composition de revêtement, d'au moins un sel alcalin, soluble dans l'eau, d'un acide gras ayant de 10 à 18 atomes de carbone.

4. Pellicule selon la revendication 3, caractérisée en ce qu'elle est une pellicule préparée par extrusion à partir d'un polyester, d'un polyamide, d'un polycarbonate ou d'une polyoléfine telle que le polyéthylène ou le polypropylène.

5. Pellicule selon la revendication 4, caractérisée en ce qu'elle est une pellicule de poly(téréphtalate d'éthylène) orientée biaxialement.

6. Procédé pour la fabrication d'une pellicule thermoplastique orientée, sur laquelle est appliqué un revêtement agissant en tant qu'agent favorisant l'adhérence pour métal, dans lequel

I. une résine thermoplastique pratiquement amorphe est extrudée à travers une filière plate et ensuite refroidie pour donner une pellicule primaire thermoplastique,

II. la pellicule primaire thermoplastique est ensuite étirée dans le sens longitudinal pour donner une pellicule thermoplastique orientée uniaxialement,

III. la pellicule thermoplastique orientée uniaxialement est revêtue avec une composition aqueuse de revêtement,

IV. on étire ensuite dans le sens transversal la pellicule thermoplastique orientée uniaxialement, de manière à obtenir une pellicule thermoplastique orientée biaxialement, et

V. la pellicule thermoplastique orientée biaxialement est thermofixée, caractérisé en ce que la composition aqueuse de revêtement contient au moins les composants suivants :

I. de 1 à 10% en poids, par rapport au poids total de la composition de revêtement, d'un copolyester sulfoné qui est essentiellement constitué du produit de condensation des monomères suivants ou de leurs dérivés aptes à la formation de polyesters :

A) de 65 à 95% en moles d'acide isophtalique,

B) de 0 à 30% en moles d'au moins un acide dicarboxylique aliphatique de formule $HOOC(CH_2)_nCOOH$, n étant dans la plage de 1 à 11,

C) de 5 à 15% en moles d'au moins un monomère sulfoné comportant un groupe sulfonate alcalin lié au fragment aromatique d'un acide dicarboxylique aromatique, et

D) la quantité stoechiométrique, requise pour la formation de 100% en moles de produit de condensation, d'au moins un alkylèneglycol copolymérisable, aliphatique ou cycloaliphatique, ayant de 2 à 11 atomes de carbone,

II. de 0,05 à 3% en poids, par rapport au poids total de la composition de revêtement, d'au moins un sel alcalin, soluble dans l'eau, d'un acide gras ayant de 10 à 18 atomes de carbone.

7. Pellicule métallisée comportant un matériau de support en matière plastique et une couche d'accrochage appliquée d'un côté ou des deux sur le matériau de support, en une épaisseur de couche sèche dans la plage de 0,0025 à 0,25 µm, caractérisée en ce que la couche d'accrochage consiste essentiellement en

I. le produit de condensation des monomères suivants ou de leurs dérivés aptes à la formation de polyester:

A) de 65 à 95% en moles d'acide isophtalique,

B) de 0 à 30% en moles d'au moins un acide dicarboxylique aliphatique de formule $HOOC(CH_2)_nCOOH$,

n étant dans la plage de 1 à 11,

C) de 5 à 15% en moles d'au moins un monomère sulfoné comportant un groupe sulfonate alcalin lié au fragment aromatique d'un acide dicarboxylique aromatique, et

D) la quantité stoechiométrique, requise pour la formation de 100% en moles de produit de condensation, d'au moins un alkylèneglycol copolymérisable, aliphatique ou cycloaliphatique, ayant de 2 à 11 atomes de carbone, et

II. au moins un sel alcalin soluble dans l'eau d'un acide gras ayant de 10 à 18 atomes de carbone ; cette pellicule étant munie d'une couche métallique en une épaisseur dans la plage de 2,5 à 200 nm.